# EUROPEAN PATENT SPECIFICATION

(11) **EP 4 206 042 B1**
(45) Date of publication and mention of the grant of the patent: **03.09.2025**
(21) Application number: 21861008.7
(22) Date of filing: 12.07.2021
(51) Int. Cl.: B60R 21/36

(54) **PEDESTRIAN PROTECTION AIRBAG DEVICE**
FUSSGÄNGERSCHUTZ-AIRBAGVORRICHTUNG
DISPOSITIF DE COUSSIN DE SÉCURITÉ GONFLABLE POUR PROTECTION DE PIÉTONS

(30) Priority: 26.08.2020 JP 2020142739
(43) Date of publication of application: 05.07.2023
(73) Proprietor: Autoliv Development AB, 44783 Vargarda (SE)
(72) Inventor: HARADA, Tomoaki, Yokohama-shi, Kanagawa 222-8580 (JP)
(74) Representative: Müller Verweyen
(86) International application number: PCT/JP2021/026116
(87) International publication number: WO 2022/044578

(56) References cited:
- WO-A1-2019/039333
- JP-A- 2001 277 966
- JP-A- 2005 178 587
- JP-A- 2006 335 173
- JP-A- 2009 227 047
- JP-A- 2011 194 936
- JP-A- 2015 157 616
- JP-A- 2018 199 401
- JP-A- 2019 031 212
- JP-A- 2019 142 319

## Description

### TECHNICAL FIELD

The present invention relates to a pedestrian protection airbag device having an airbag cushion that expands and deploys from below a front hood of a vehicle towards a windshield. Document JP2006 33 5173 A discloses a pedestrian protection airbag according to the preamble of claim 1.

### BACKGROUND TECHNOLOGY

In recent years, pedestrian protection airbag devices have been developed to protect pedestrians outside a vehicle, as an airbag device that differs from devices that restrain occupants inside the vehicle. Primarily, pedestrian protection airbag devices are configured to expand and deploy an airbag cushion at a position where there is a possibility that the body of the pedestrian would contact, such as a windshield or the like, when a sensor installed in the front portion of the vehicle detects contact with a pedestrian.

The pedestrian protection airbag device needs to quickly cover, as a protection area, a range of the vehicle with which a pedestrian may come into contact. For example, with the pedestrian protection airbag device disclosed in Patent Document 1, the airbag main body 28 is configured to expand and deploy to cover the front windshield 3 and the front pillars 4L and 4R of the vehicle.

### Prior Art Documents

### Patent Documents

[Patent Document 1] Japanese Unexamined Patent Application 2016-97833

### SUMMARY OF THE INVENTION

With the technology of Patent Document 1, in order to suppress oscillation at the initial stage of expansion, a restriction member 45 is stretched between a pillar cover part 34 and a cowl cover part 30, and the pillar cover part 34 is pulled toward the center side in the vehicle width direction. However, care must be taken that a string-like member such as the restriction member 45 does not become entangled or come into contact with a pedestrian during expansion and deployment, and thus handling may become complicated.

### PROBLEM TO BE SOLVED BY THE INVENTION

In light of these problems, an object of the present invention is to provide a pedestrian protection airbag device that can efficiently protect a pedestrian using a simple configuration.

### MEANS FOR SOLVING THE PROBLEMS

In order to resolve the aforementioned problem, a typical configuration of the pedestrian protection airbag device according to the present invention is defined by claim 1.

With the aforementioned configuration, the high friction region comes into contact with the vicinity of the A-pillars on both sides in the vehicle width direction, and thus it is possible to suppress oscillation of the airbag cushion at the time of expansion and deployment so as to cover the protection area of the vehicle at an earlier stage, and also to suppress movement of the airbag cushion when restraining the pedestrian in order to suitably restrain the pedestrian. In particular, when the pedestrian is restrained, the pedestrian can be suitably protected from contact with the A-pillar which has high rigidity. Therefore, with the above configuration, it is possible to achieve a pedestrian protection airbag device capable of efficiently protecting a pedestrian with a simple configuration.

The predetermined range of the protruding expansion portion includes at least a tip end part on a surface side facing the A-pillar. By providing the high friction region up to the tip end part of the protruding expansion portion, it is possible to efficiently suppress oscillation of the airbag cushion.

The high friction region includes a portion formed across the entire region of the protruding expansion portion in the vehicle width direction. The high friction region of this configuration contacts the vicinity of the A-pillar, thereby efficiently suppressing oscillation of the airbag cushion.

The high friction region may include a portion formed to gradually flatten toward the tip end part of the protruding expansion portion. Because of the high friction region of this configuration, the area gradually increases toward the tip end part of the protruding expansion portion; therefore, it is possible to efficiently suppress oscillation of the airbag cushion.

The high friction region is formed over the entire region of the protruding expansion portion. The high friction region with this configuration contacts the vicinity of the A-pillar, and this also efficiently suppresses oscillation of the airbag cushion.

The high friction region may be formed of a predetermined resin layer. This configuration makes it possible to suitably achieve the high friction region described above.

The predetermined resin layer may be formed of a resin layer thicker than the other resin layers formed on the outer surface of the airbag cushion. This configuration also makes it possible to suitably achieve the high friction region described above.

The high friction region described above may be fitted with an attached patch that has a surface with a higher coefficient of friction than the other outer surfaces of the airbag cushion. This configuration also makes it possible to suitably achieve the high friction region described above.

The airbag cushion is stored below the front hood in a predetermined storage form, and the airbag cushion in the storage form may have a rolled portion with the protruding expansion portion rolled from the tip end side to the main expansion portion side opposite the A-pillar.

The airbag cushion in the stored form is configured such that the protruding expansion portion expands and deploys from the main expansion portion side toward the tip end side while unrolling the rolled portion. At this time, the rolled portion is rolled such that the center thereof is positioned on the side opposite to the A-pillar, and the force for unrolling the rolled portion acts in a direction such that the protruding expansion portion is pressed against the A-pillar. Therefore, with the above-described configuration, when the airbag cushion is expanded and deployed, the high friction region provided on the surface of the protruding expansion portion on the A-pillar side is pressed against the A-pillar, and thus oscillation of the airbag cushion can be efficiently suppressed.

### EFFECT OF THE INVENTION

The present invention can provide a pedestrian protection airbag device that can efficiently protect pedestrians with a simple configuration.

### BRIEF DESCRIPTION OF THE DRAWINGS

FIG. 1 is a diagram illustrating an overview of a pedestrian protection airbag device which is not part of the present invention.
FIG. 2 is a diagram illustrating an example of an enlarged view of the pedestrian protection airbag device of FIG. 1(b) from above.
FIG. 3 is a diagram illustrating the airbag cushion of FIG. 2(b) as viewed from vehicle side.
FIG. 4 is a diagram illustrating the first modified example of the high friction region in FIG. 3.
FIG. 5 is a diagram illustrating the second and third modified examples of the high friction region in FIG. 3.
FIG. 6 is a diagram illustrating the fourth and fifth modified examples of the high friction region in FIG. 3.
FIG. 7 is a diagram illustrating a storage form of the airbag cushion in FIG. 2.
FIG. 8 is a diagram illustrating an example of a condition of expanding and deploying the airbag cushion in the storage form in FIG. 7(b).

### MODE FOR CARRYING OUT THE INVENTION

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

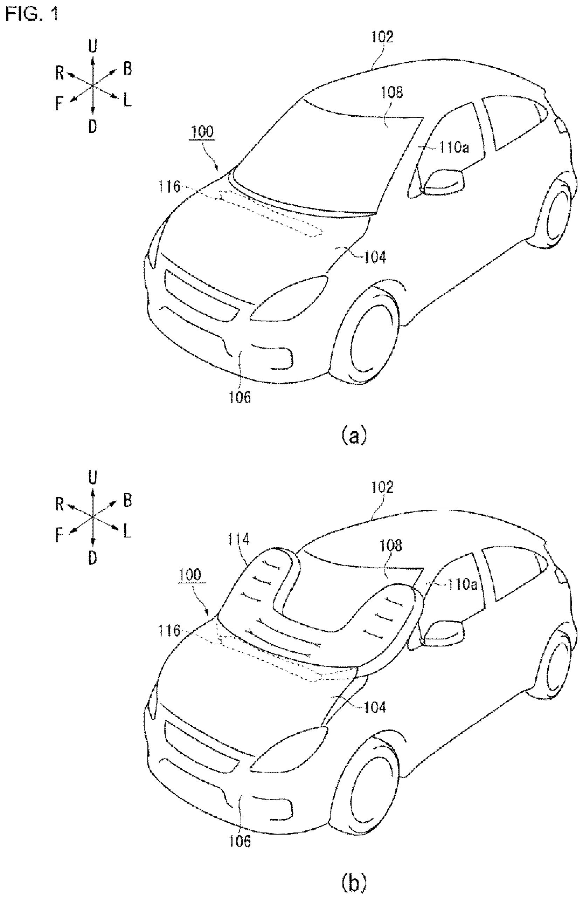

FIG. 1 is a diagram illustrating an overview of a pedestrian protection airbag device 100 which is not part of the present invention. FIG. 1(a) is a diagram illustrating a vehicle before the pedestrian protection airbag device 100 is activated, and FIG. 1(b) is a diagram illustrating a vehicle when the pedestrian protection airbag device 100 is activated. Regarding FIG. 1 and other figures, a vehicle front-rear direction is illustrated by the symbols F (Front) and B (Back), a vehicle width direction of the vehicle by the symbols L (Left) and R (Right), and a vehicle up-down direction by the symbols U (Up) and D (Down).

As illustrated in FIG. 1(a), the pedestrian protection airbag device 100 is installed below a front hood 104 of a vehicle 102. The pedestrian protection airbag device 100 is equipped with a sensor, (not illustrated), at a location where a leg or the like of a pedestrian is likely to come into contact, for example, inside the vicinity of a front bumper 106. The device is configured such that when the sensor detects contact with a pedestrian, an activation signal is sent to gas generating devices known as inflators 112a, 112b via a controller or the like, and an airbag cushion 114 expands and deploys from below the front hood 104 toward a windshield 108, as illustrated in FIG. 1(b).

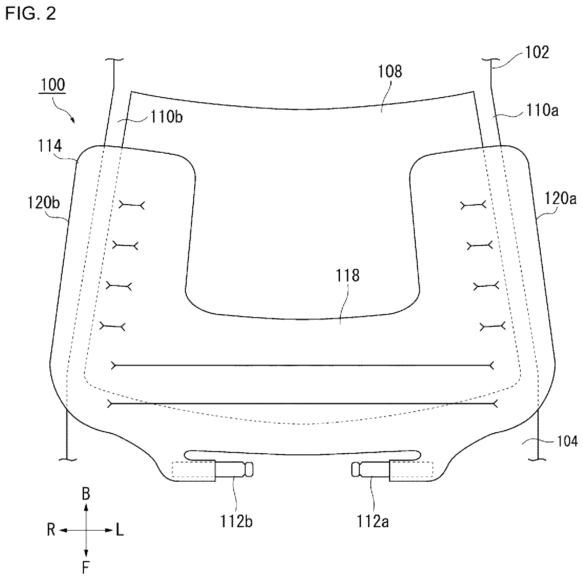

As illustrated in FIG. 1(a), the pedestrian protection airbag device 100 includes a housing 116, in which an airbag cushion 114 is stored. The housing 116 is a long, box-like container primarily formed of resin, which stores the airbag cushion 114 (see FIG. 2), the inflator 112a, 112b, and the like. The housing 116 is mounted on the underside of the front hood 104 via a special bracket or the like, with the longitudinal direction thereof facing the vehicle width direction.

As illustrated in FIG. 1(b), the airbag cushion 114 expands and deploys along the windshield 108 to stop pedestrians that are about to contact the windshield 108. In addition, the airbag cushion 114 can be configured to lift and slightly raise the front hood 104. This action has the effect of softening the impact on pedestrians who come in contact with the front hood 104.

FIG. 2 is a diagram illustrating an example of an enlarged view of the pedestrian protection airbag device of FIG. 1(b) from above. The airbag cushion 114 is bag shaped and formed by overlapping and sewing; alternatively, multiple base cloths (configuring the surface thereof) are adhered and overlapped or formed by spinning and weaving using an OPW (one-piece woven), or the like.

The inflators 112a, 112b are disposed on the front end side of the airbag cushion 114 along the vehicle width direction. The inflators 112a, 112b are secured to the inside of the housing 116 using a stud bolt (not illustrated), and are activated by an impact detection signal sent from a predetermined sensor so as to supply gas to the airbag cushion 114. The airbag cushion 114 begins to expand due to the gas from the inflators 112a, 112b, the expansion pressure or the like splits the housing 116, and the cushion expands and deploys toward the windshield 108.

The inflators 112a, 112b in the present example are a cylinder type. Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any type of inflator can be used as the inflators 112a, 112b.

The expansion region of the airbag cushion 114 into which gas flows and which expands is broadly divided into a main expansion portion 118 and a pair of protruding expansion portions 120a, 120b.

The main expansion portion 118 receives gas from the inflators 112a, 112b, and expands and deploys so as to cover the lower portion of the windshield 108 from the left side A-pillar 110a to the right side A-pillar 110b in the vehicle width direction, thereby broadening the surface area for receiving and stopping the body of a pedestrian.

The main expansion region 118 can be configured to lift the rear end vicinity of the front hood 104 from below, or can be configured to expand and deploy so as to overlap on the upper side of the rear end vicinity of the front hood 104. If the main expansion region 118 lifts the vicinity of the rear end of the front hood 104, the front hood 104 can be raised to soften the impact of a pedestrian coming into contact with the front hood 104.

The pair of protruding expansion portions 120a, 120b are provided on both end sides of the main expansion portion 118 in the vehicle width direction so as to protrude upward along the A-pillars 110a, 110b. The protruding expansion portions 120a, 120b expand and deploy to cover the A-pillars 110a, 110b when gas is received from the main expansion portion 118, thus preventing the head and the like of a pedestrian from contacting the rigid A-pillars 110a, 110b.

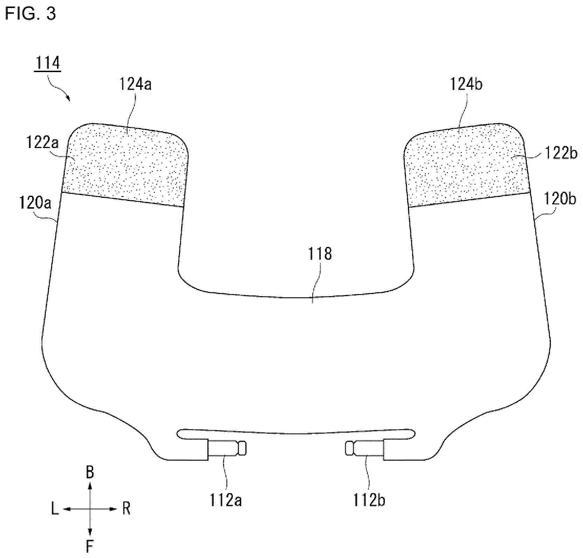

FIG. 3 is a diagram illustrating the airbag cushion 114 of FIG. 2(b) as viewed from the vehicle side. The airbag cushion 114 has high friction regions 122a, 122b on the A-pillar 110a, 110b sides of each of the pair of protruding expansion portions 120a, 120b. The high friction regions 122a, 122b have a higher coefficient of friction than the other outer surfaces of the airbag cushion 114, and are less prone to slipping when in contact with the vicinity of the A-pillars 110a, 110b.

The high friction regions 122a, 122b can be formed by coating a resin layer to the surface of the panels forming the protruding expansion portions 120a, 120b. The panels of the airbag cushion 114 may be coated with resin for the purpose of enhancing heat resistance and wear resistance. The high friction regions 122a, 122b can be formed by providing a resin layer only on the protruding expansion portions 120a, 120b, or by providing a thicker resin layer on the protruding expansion portions 120a, 120b than the resin layers formed on the other outer surfaces of the airbag cushion 114. This configuration makes it possible to suitably achieve the high friction regions 122a, 122b described above.

As another configuration, the high friction regions 122a, 122b may be formed by attaching a patch formed of a material different from the panels forming the airbag cushion 114 to the protruding expansion portions 120a, 120b. The material of the patch should be such that the coefficient of friction of the surface is greater than the coefficient of friction of the other outer surfaces of the airbag cushion 114. This type of patch can also suitably provide the high friction regions 122a, 122b.

The high friction regions 122a, 122b are formed in a range including at least tip end parts 120a, 120b and portions in the vicinity thereof on the front surface sides of the pair of protruding expansion portions 124a, 124b facing the A-pillars 110a, 110b. Therefore, the protruding expansion portions 120a, 120b are less prone to slipping when the range including the tip end parts 124a, 124b come into contact with the A-pillars 110a, 110b and the windshield 108. This configuration efficiently suppresses oscillation of the airbag cushion 114 during expansion and deployment, allowing the cushion to more quickly reach the position for receiving and restraining the pedestrian.

In addition, the high friction regions 122a, 122b are formed so as to extend over the entire region in the vehicle width direction on the A-pillar 110a, 110b side of the protruding expansion portions 120a, 120b. The high friction regions 122a, 122b of this configuration come into contact with the A-pillars 110a, 110b and the windshield 108 in the vicinity thereof; therefore, oscillation of the airbag cushion 114 can be efficiently suppressed.

As described above, the high friction regions 120a, 120b of the protruding expansion portions 122a, 122b of the airbag cushion 114 come into contact with the A-pillars 110a, 110b on both sides in the vehicle width direction; therefore, oscillation of the airbag cushion 114 at the time of expansion and deployment can be suppressed, such that the protection area of the vehicle can be covered more quickly. In addition, even when the pedestrian is restrained, the movement of the airbag cushion 114 can be suppressed in order to suitably restrain the pedestrian. In particular, when a pedestrian is restrained, the pedestrian can be suitably protected from contact with the rigid A-pillars 110a, 110b by the protruding expansion portions 120a, 120b, and since the protruding expansion portions 120a, 120b will not easily move from the vicinity of the A-pillars 110a, 110b, the load can be efficiently absorbed when receiving and stopping a pedestrian. Therefore, the pedestrian protection airbag device 100 can efficiently protect pedestrians with a simple configuration.

### Modified Example

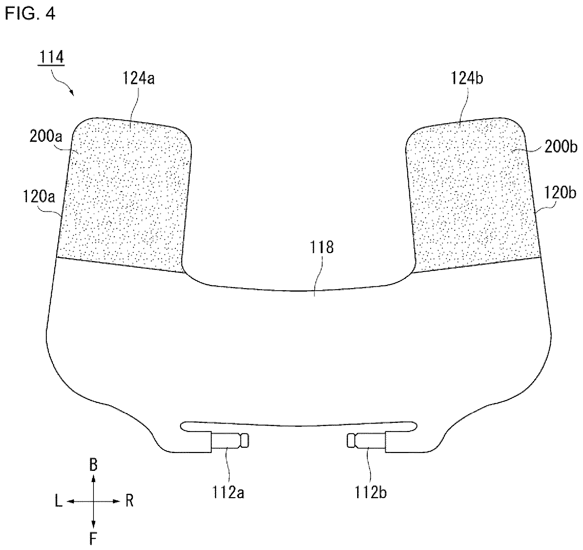

Modified examples of each of the above-described components are described below. FIG. 4 illustrates a first modified example (high friction regions 200a, 200b) of the high friction regions 122a, 122b in FIG. 3(a). In FIG. 4, the same symbols are assigned to the same structural elements as those described above, and a description of the aforementioned structural elements is omitted. In the following description, components having the same name as a component already described are assumed to have the same function unless otherwise specified, even if marked with a different sign.

The high friction regions 200a, 200b are formed over the entire region of the protruding expansion portions 120a, 120b on the A-pillars 110a, 110b side. In detail, the high friction regions 200a, 200b are formed from the tip end parts 124a, 124b of the protruding expansion portions 120a, 120b to the boundary with the main expansion portion 118, as well as across the entire region in the vehicle width direction of the protruding expansion portions 120a, 120b. It is also possible to efficiently suppress oscillation of the airbag cushion 114 by bringing the high friction regions 200a, 200b into contact with the vicinity of the A-pillars 110a, 110b. Therefore, the present modified example of the pedestrian protection airbag device 100 (see FIG. 1(b)) is capable of efficiently protecting a pedestrian with a simple configuration.

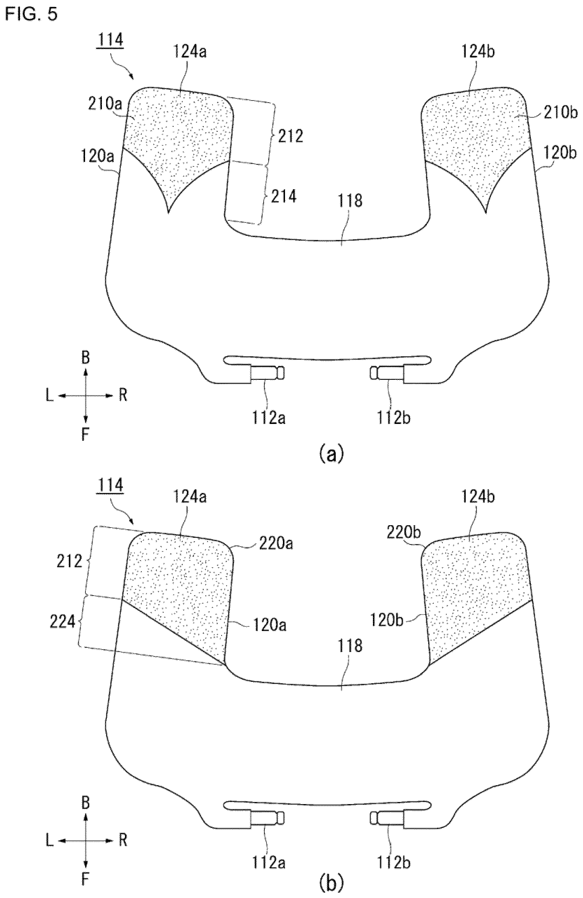

FIG. 5 is a diagram illustrating the second example which is configured according to the present invention and a third modified example of the high friction regions 120a, 120b in FIG. 3(a). FIG. 5(a) illustrates the second modified example (high friction regions 210a, 210b) of the high friction regions 122a, 122b. The high friction regions 210a, 210b have the same configuration; therefore, the high friction region 210a will be described as a representative example.

The high friction region 210a is broadly divided into a wide portion 212 and a narrow portion 214. The wide portion 212 is a portion formed on the tip end part 124a side of the protruding expansion portion 120a, and is formed to span the entire region in the vehicle width direction of the protruding expansion portion 120a. The narrow portion 214 is a portion formed on the main expansion portion 118 side of the protruding expansion portion 120a, and is formed to be tapered from the wide portion 212 toward the main expansion portion 118 side. In other words, the narrow portion 214 is formed so as to be gradually flattened toward the tip end part 124a of the protruding expansion portion 120a.

The high friction region 210a is configured to gradually increase in area toward the tip end part 124a of the protruding expansion portion 120a, from the wide portion 212 to the narrow portion 214. In the high friction region 210a, the force of friction becomes stronger when approaching the tip end part 124a of the protruding expansion portion 120a; therefore, the overall oscillation can be efficiently suppressed in the protruding expansion portion 120a and the airbag cushion 114.

Furthermore, the high friction region 210a has a shape that extends such that the narrow portion 214 tapers toward the main expansion portion 118 side on the center side of the protruding expansion portion 120a, and is prone to be in contact with the A-pillar 110a (see FIG. 2) in the longitudinal direction. Therefore, in the high friction region 210a, a friction force easily acts on the A-pillar 110a, and thus it is possible to efficiently suppress oscillation of the protruding expansion portion 120a.

FIG. 5(b) illustrates the third modified example (high friction regions 220a, 220b) of the high friction regions 122a, 122b. The high friction region 220a also has a wide portion 212 and a narrow portion 224. The narrow portion 224 is formed along an inner edge of the protruding expansion portion 120a in the vehicle width direction.

The area gradually increases, and the force of friction becomes stronger when approaching the tip end part 124a of the protruding expansion portion 120a because of the high friction region 220a; therefore, the overall oscillation can be efficiently suppressed in the protruding expansion portion 120a and the airbag cushion 114. Furthermore, the narrow portion 224 has a shape that extends while tapering to the main expansion portion 118 side on the inner side of the protruding expansion portion 120a, and is prone to be in contact with the A-pillar 110a (see FIG. 2) in the longitudinal direction. Therefore, the high friction region 220a also provides a friction force that easily acts on the A-pillar 110a, and thus it is possible to efficiently suppress oscillation of the protruding expansion portion 120a.

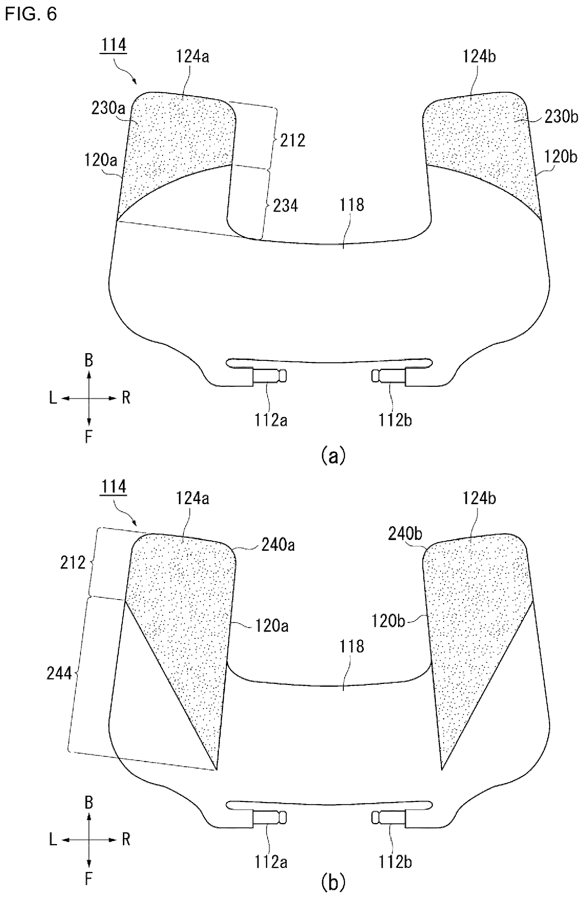

FIG. 6 is a diagram illustrating the fourth and fifth modified examples of the high friction regions 120a, 120b in FIG. 3(a). FIG. 6(a) illustrates the fourth modified example (high friction regions 230a, 230b) of the high friction regions 122a, 122b. The high friction region 230a also has a wide portion 212 and a narrow portion 234. The narrow portion 234 is formed along an outer edge of the protruding expansion portion 120a in the vehicle width direction.

The area gradually increases, and the force of friction becomes stronger when approaching the tip end part 124a of the protruding expansion portion 120a because of the high friction region 230a; therefore, the overall oscillation can be efficiently suppressed in the protruding expansion portion 120a and the airbag cushion 114. Furthermore, the narrow portion 234 has a shape that extends while tapering to the main expansion portion 118 side on the outer side of the protruding expansion portion 120a, and is prone to be in contact with the A-pillar 110a (see FIG. 2) in the longitudinal direction. Therefore, the high friction region 230a also provides a friction force that easily acts on the A-pillar 110a, and thus it is possible to efficiently suppress oscillation of the protruding expansion portion 120a.

FIG. 6(b) illustrates the fifth modified example (high friction regions 240a, 240b) of the high friction regions 122a, 122b. The high friction region 240a also has a wide portion 212 and a narrow portion 244. The narrow portion 244 is formed along an inner edge of the protruding expansion portion 120a in the vehicle width direction. In particular, the narrow portion 244 is longer on the side of the main expansion portion 118 side than the narrow portion 224 (see FIG. 5(b)).

The area gradually increases, and the force of friction becomes stronger when approaching the tip end part 124a of the protruding expansion portion 120a because of the high friction region 240a; therefore, the overall oscillation can be efficiently suppressed in the protruding expansion portion 120a and the airbag cushion 114. Furthermore, the narrow portion 244 has a shape that extends while more gradually tapering to the main expansion portion 118 side on the inner side of the protruding expansion portion 120a, and is prone to be in contact with the A-pillar 110a (see FIG. 2) across a longer range in the longitudinal direction. Therefore, the high friction region 240a also provides a friction force that easily acts on the A-pillar 110a, and thus it is possible to efficiently suppress oscillation of the protruding expansion portion 120a.

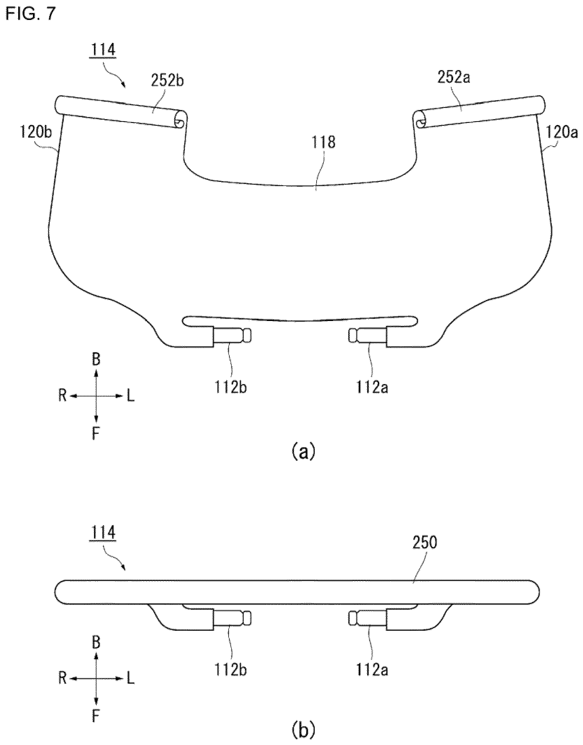

FIG. 7 is a diagram illustrating a storage form 250 of the airbag cushion 114 in FIG. 2. FIG. 7(a) is a diagram illustrating an example showing how the protruding expansion portions 120a, 120b of the airbag cushion 114 of FIG. 2 are rolled.

When the airbag cushion 114 is in the storage form 250 (see FIG. 7(b)), the rolled portions 252a, 252b are formed by rolling the protruding expansion portions 120a, 120b from the tip end parts 124a, 124b side toward the main expansion portion 118 side. The rolled portions 252a, 252b are formed such that the center is positioned on a side opposite the A-pillars 110a, 110b (see FIG. 2), or in other words, on the upper side of the vehicle.

FIG. 7(b) is a diagram illustrating a storage form 250 of the airbag cushion 114. The storage form 250 is a long form in the vehicle width direction, formed by rolling and folding. The airbag cushion 114 is stored in the storage form 250, and then stored in a housing 116 below the front hood 104 (FIG. 1(a)).

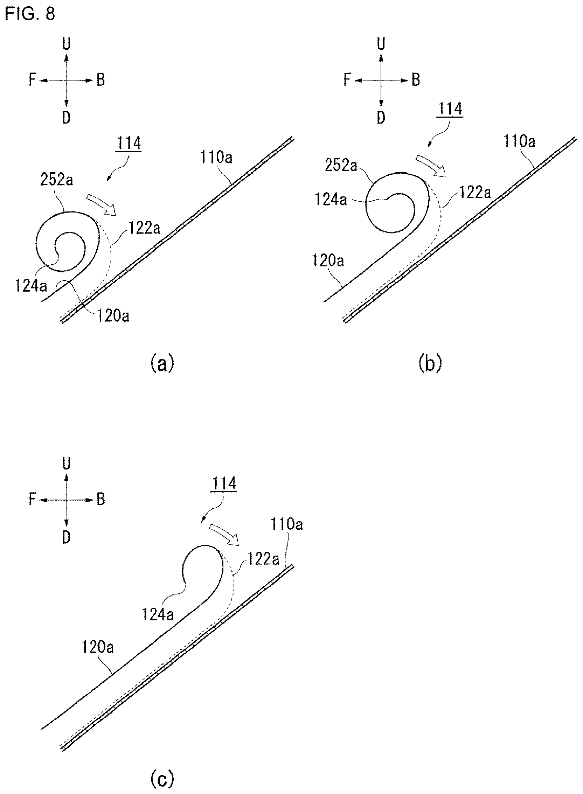

FIG. 8 is a diagram illustrating an example of a process of expanding and deploying the airbag cushion 114 in the storage form 250 in FIG. 7(b). FIG. 8(a) illustrates the airbag cushion 114 as viewed from the left side in the vehicle width direction.

The airbag cushion 114 is configured such that the protruding expansion portion 120a expands and deploys from the main expansion portion 118 side (See FIG. 7(a)) toward the tip end part 124a side while unrolling the rolled portion 252a. At this time, the rolled portion 252a is rolled such that the center thereof is positioned on the side opposite to the A-pillar 110a, the force for unrolling the rolled portion 252a acts in a direction such that the protruding expansion portion 116 is pressed against the A-pillar 110a.

FIG. 8(b) illustrates an example of the state of expansion and deployment of the airbag cushion 114 in FIG. 8(a). The high friction region 122a can be efficiently brought into contact with the A-pillar 110a by the force for unrolling the rolled portion 252a. FIG. 8(c) illustrates an example of the state of expansion and deployment of the airbag cushion in FIG. 8(a). As the rolled portion 252a is unrolled, the high friction region 122a widely contacts the A-pillar 110a.

With the configuration that provides the rolled portion 252a, when the airbag cushion 114 is expanded and deployed, the high friction region 122a provided on the surface of the protruding expansion portion 122a on the A-pillar 110a side is pressed against the A-pillar 110a, and thus oscillation of the airbag cushion 114 can be more efficiently suppressed.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, it is obvious that a person with ordinary skill in the art can conceive various changed examples or modified examples within the scope of the claims.

### INDUSTRIAL APPLICABILITY

The present invention can be used as a pedestrian protection airbag device having an airbag cushion that expands and deploys from below a front hood of a vehicle toward a windshield.

### DESCRIPTION OF CODES

100. Pedestrian protection airbag device, 102. Vehicle, 104. Front hood, 106. Front bumper, 108. Windshield, 110a, 110b. A-pillar, 112a, 112b. Inflator, 114. Airbag cushion, 116. Housing, 118. Main expansion portion, 120a, 120b. Protruding expansion portion, 122a, 122b. High friction region, 124a, 124b. Tip end part of protruding expansion portion, 200a, 200b. High friction region of the first modified example, 210a, 210b. High friction region of the second modified example, 212. Wide portion, 214. Narrow portion, 220a, 220b. High friction area of the third modified example, 224. Narrow portion, 230a. High friction region of the fourth modified example, 234. Narrow portion 240a. High friction region of the fifth modified example, 244. Narrow portion, 250. Storage form, 252a, 252b. Rolled portion

## Claims

1. A pedestrian protection airbag device (100), comprising: an airbag cushion (114) that expands and deploys from below a front hood (104) of a vehicle (102) toward a windshield (108), and an inflator (112a, 112b) that supplies gas to the airbag cushion (114);
wherein
the airbag cushion (114) includes:
a main expansion portion (118) covering at least a lower portion of the windshield (108) from one of a pair of A-pillars (110a, 110b) to the other of the pair of A-pillars (110a, 110b) in the vehicle;
a pair of protruding expansion portions (120a, 120b) protruding upward from the main expansion portion (118) along each of the pair of A-pillars (110a, 110b), so as to cover the A-pillars (110a, 110b); **characterized by**
a high friction region (122a, 122b, 200a, 200b, 210a,2 10b, 220a, 220b, 230a, 240a) formed in a predetermined range including at least a portion of the vicinity of a tip end part (124a, 124b) on a surface side of each of the pair of protruding expansion portions (120a, 120b) facing the corresponding A-pillar (110a, 110b), and having a coefficient of friction higher than that of the other outer surfaces of the airbag cushion (114), wherein the high friction region (122a, 122b, 200a, 200b, 210a, 210b, 220a, 220b, 230a, 240a) includes a wide portion (212) formed over an entire region of the protruding expansion portion (120a, 120b) in the vehicle width direction and a narrow portion (214) formed on the main expansion portion (118) side of the protruding expansion portion (120a,120b) and is formed to be tapered from the wide portion (212) toward the main expansion portion (118) side.

2. The pedestrian protection airbag device (100) according to claim 1, wherein the high friction (122a, 122b, 200a, 200b, 210a, 210b, 220a, 220b, 230a, 240a) region includes a portion formed to gradually flatten toward the tip end part (124a, 124b) of the protruding expansion portion (120a, 120b).

3. A pedestrian protection airbag device (100) according to any one of claims 1 or 2, wherein the high friction region (122a, 122b, 200a, 200b, 210a, 210b, 220a, 220b, 230a, 240a) is formed with a predetermined resin layer.

4. The pedestrian protection airbag device (100) according to claim 3, wherein the predetermined resin layer is formed by a resin layer thicker than the resin layer formed on the other outer surfaces of the airbag cushion (114).

5. The pedestrian protection airbag device (100) according to any one of claims 1 to 4, wherein a patch having a surface with a higher coefficient of friction than the other outer surfaces of the airbag cushion (114) is attached to the high friction region (122a, 122b, 200a, 200b, 210a, 210b, 220a, 220b, 230a, 240a).

6. The pedestrian protection airbag device (100) according to any one of claims 1 to 5, wherein
the airbag cushion (114) is stored below the front hood (104) in a predetermined storage form; and
the airbag cushion (114) in the aforementioned storage form has a rolled portion (252a, 252b) in which the protruding expansion portion (120a, 120b) is rolled on a side opposite to the A-pillar (110a, 110b) from a tip end side toward the main expansion portion side.

## Patentansprüche

1. Fußgängerschutzairbagvorrichtung (100), umfassend: ein Airbagkissen (114), das sich von unterhalb einer Motorhaube (104) eines Fahrzeugs (102) in Richtung einer Windschutzscheibe (108) ausdehnt und entfaltet, und einen Gasgenerator (112a, 112b), der das Airbagkissen (114) mit Gas versorgt;
wobei
das Airbagkissen (114) einschließt:
einen Hauptausdehnungsabschnitt (118), der mindestens einen unteren Abschnitt der Windschutzscheibe (108) von einer eines Paares von A-Säulen (110a, 110b) zu der anderen des Paares von A-Säulen (110a, 110b) in dem Fahrzeug abdeckt;
ein Paar hervorstehender Ausdehnungsabschnitte (120a, 120b), die von dem Hauptausdehnungsabschnitt (118) entlang jedem des Paars von A-Säulen (110a, 110b) nach oben hervorstehen, um die A-Säulen (110a, 110b) abzudecken; **gekennzeichnet durch**
einen Bereich (122a, 122b, 200a, 200b, 210a, 210b, 220a, 220b, 230a, 240a) mit hoher Reibung, der in einer vorbestimmten Zone ausgebildet ist, einschließlich mindestens einen Abschnitt der Umgebung eines Spitzenendteils (124a, 124b) auf einer Oberflächenseite jedes des Paares von hervorstehenden Ausdehnungsabschnitten (120a, 120b), die der entsprechenden A-Säule (110a, 110b) zugewandt sind, und der einen Reibungskoeffizienten aufweist, der höher als der der anderen Außenoberflächen des Airbagkissens (114) ist, wobei der Bereich (122a, 122b, 200a, 200b, 210a, 210b, 220a, 220b, 230a, 240a) mit hoher Reibung einen breiten Abschnitt (212), der über einen gesamten Bereich des hervorstehenden Ausdehnungsabschnitt (120a, 120b) in der Fahrzeugbreitenrichtung ausgebildet ist, und einen schmalen Abschnitt (214) einschließt, der auf der Seite des Hauptausdehnungsabschnitts (118) des hervorstehenden Ausdehnungsabschnitts (120a, 120b) ausgebildet ist, und ausgebildet ist, um sich von dem breiten Abschnitt (212) in Richtung der Seite des Hauptausdehnungsabschnitts (118) zu verjüngen.

2. Fußgängerschutzairbagvorrichtung (100) nach Anspruch 1, wobei der Bereich (122a, 122b, 200a, 200b, 210a, 210b, 220a, 220b, 230a, 240a) mit hoher Reibung Abschnitt einschließt, der geformt ist, um in Richtung des Spitzenendteils (124a, 124b) des hervorstehenden Ausdehnungsabschnitts (120a, 120b) allmählich flacher zu werden.

3. Fußgängerschutzairbagvorrichtung (100) nach einem der Ansprüche 1 oder 2, wobei der Bereich (122a, 122b, 200a, 200b, 210a, 210b, 220a, 220b, 230a, 240a) mit hoher Reibung mit einer vorbestimmten Harzschicht ausgebildet ist.

4. Fußgängerschutzairbagvorrichtung (100) nach Anspruch 3, wobei die vorbestimmte Harzschicht durch eine Harzschicht ausgebildet wird, die dicker als die Harzschicht ist, die auf den anderen Außenoberflächen des Airbagkissens (114) ausgebildet ist.

5. Fußgängerschutzairbagvorrichtung (100) nach einem der Ansprüche 1 bis 4, wobei an dem Bereich (122a, 122b, 200a, 200b, 210a, 210b, 220a, 220b, 230a, 240a) mit hoher Reibung ein Flicken, der eine Oberfläche mit einem höheren Reibungskoeffizienten als die anderen Außenoberflächen des Airbagkissens (114) aufweist, angebracht ist.

6. Fußgängerschutzairbagvorrichtung (100) nach einem der Ansprüche 1 bis 5; wobei
das Airbagkissen (114) unterhalb der Motorhaube (104) in einer vorbestimmten Aufbewahrungsform aufbewahrt ist; und
das Airbagkissen (114) in der vorgenannten Aufbewahrungsform einen gerollten Abschnitt (252a, 252b) aufweist, in dem der hervorstehende Ausdehnungsabschnitt (120a, 120b) auf einer der A-Säule (110a, 110b) gegenüberliegenden Seite von einer Spitzenendseite in Richtung der Seite des Hauptausdehnungsabschnitts gerollt ist.

## Revendications

1. Dispositif de coussin de sécurité gonflable pour protection de piéton (100), comprenant : un coussinet de coussin de sécurité gonflable (114) qui se dilate et se déploie depuis le dessous d'un capot avant (104) d'un véhicule (102) vers un pare-brise (108), et un gonfleur (112a, 112b) qui alimente en gaz le coussinet de coussin de sécurité gonflable (114) ;
dans lequel
le coussinet de coussin de sécurité gonflable (114) comporte :
une partie d'expansion principale (118) couvrant au moins une partie inférieure du pare-brise (108) depuis l'un d'une paire de montants A (110a, 110b) à l'autre de la paire de montants A (110a, 110b) dans le véhicule ;
une paire de parties d'expansion saillantes (120a, 120b) faisant saillie vers le haut à partir de la partie d'expansion principale (118) le long de chacun de la paire de montants A (110a, 110b), de manière à recouvrir les montants A (110a, 110b) ; **caractérisé par**
une zone de frottement élevé (122a, 122b, 200a, 200b, 210a, 210b, 220a, 220b, 230a, 240a) formée dans une plage prédéterminée comportant au moins une partie de la proximité d'une partie d'extrémité de pointe (124a, 124b) sur un côté de surface de chacune de la paire de parties d'expansion saillantes (120a, 120b) faisant face au montant A (110a, 110b) correspondant, et ayant un coefficient de frottement plus élevé que celui des autres surfaces externes du coussinet de coussin de sécurité gonflable (114), dans lequel la zone de frottement élevé (122a, 122b, 200a, 200b, 210a, 210b, 220a, 220b, 230a, 240a) comporte une partie large (212) formée sur toute une zone de la partie d'expansion saillante (120a, 120b) dans la direction de la largeur du véhicule et une partie étroite (214) formée sur le côté partie d'expansion principale (118) de la partie d'expansion saillante (120a, 120b) et est formée pour être effilée à partir de la partie large (212) vers le côté partie d'expansion principale (118).

2. Dispositif de coussin de sécurité gonflable pour protection de piéton (100) selon la revendication 1, dans lequel la zone de frottement élevé (122a, 122b, 200a, 200b, 210a, 210b, 220a, 220b, 230a, 240a) comporte une partie formée pour s'aplatir progressivement vers la partie d'extrémité de pointe (124a, 124b) de la partie d'expansion saillante (120a, 120b).

3. Dispositif de coussin de sécurité gonflable pour protection de piéton (100) selon l'une quelconque des revendications 1 ou 2, dans lequel la zone de frottement élevé (122a, 122b, 200a, 200b, 210a, 210b, 220a, 220b, 230a, 240a) est formée d'une couche de résine prédéterminée.

4. Dispositif de coussin de sécurité gonflable pour protection de piéton (100) selon la revendication 3, dans lequel la couche de résine prédéterminée est formée par une couche de résine plus épaisse que la couche de résine formée sur les autres surfaces externes du coussinet de coussin de sécurité gonflable (114).

5. Dispositif de coussin de sécurité gonflable pour protection de piéton (100) selon l'une quelconque des revendications 1 à 4, dans lequel une pièce ayant une surface avec un coefficient de frottement plus élevé que les autres surfaces externes du coussinet de coussin de sécurité gonflable (114) est fixée à la zone de frottement élevé (122a, 122b, 200a, 200b, 210a, 210b, 220a, 220b, 230a, 240a).

6. Dispositif de coussin de sécurité gonflable pour protection de piéton (100) selon l'une quelconque des revendications 1 à 5, dans lequel
le coussinet de coussin de sécurité gonflable (114) est stocké sous le capot avant (104) dans une forme de stockage prédéterminée ; et
le coussinet de coussin de sécurité gonflable (114) dans la forme de stockage susmentionnée présente une partie roulée (252a, 252b) dans laquelle la partie d'expansion saillante (120a, 120b) est roulée sur un côté opposé au montant A (110a, 110b) à partir d'un côté d'extrémité de pointe vers le côté partie d'expansion principale.
